# EUROPEAN PATENT APPLICATION

(11) **EP 3 336 124 A1**
(43) Date of publication of application: **20.06.2018**
(21) Application number: 17204243.4
(22) Date of filing: 28.11.2017
(51) Int. Cl.: C08G 61/10, C08G 61/12, C09D 165/02, C08L 65/02, H01L 23/532

(54) **POLYARYLENE COMPOSITIONS AND METHODS**

(30) Priority: 14.12.2016 US 201662434060 P
(71) Applicant: Rohm and Haas Electronic Materials LLC, Marlborough, MA 01752 (US)
(72) Inventor: GILMORE, Christopher, Marlborough, MA 01752 (US); RACHFORD, Aaron A., Marlborough, MA 01752 (US); MICHAEL-SAPIA, Elizabeth K., Marlborough, MA 01752 (US); LEE, Dong-Eun, Marlborough, MA 01752 (US); ZHANG, Jieqian, Marlborough, MA 01752 (US); DING, Ping, Marlborough, MA 01752 (US); KIM, Young-Seok, Marlborough, MA 01752 (US)
(74) Representative: Houghton, Mark Phillip

(57) **Abstract**

Polyarylene oligomer compositions having improved adhesion to surfaces as compared to conventional polyarylene oligomers are useful in forming dielectric material layers in electronics applications.

## Description

The present invention relates generally to the field of polyarylene resins and more particularly to the field of polyarylene resin compositions for use in the manufacture of electronic devices.

Polymer dielectrics may be used as insulating layers in various electronic devices, such as integrated circuits, multichip modules, laminated circuit boards, displays and the like. The electronics fabrication industry has different requirements for dielectric materials, such as dielectric constant, coefficient of thermal expansion, modulus, and the like, depending upon the particular application. Polymer dielectric materials often possess properties which offer advantages over inorganic dielectric materials in certain applications, such as ease of application such as by spin-coating techniques, gap-filling ability, lower dielectric constants, and the ability to withstand certain stresses without fracturing, that is, polymer dielectrics can be less brittle than inorganic dielectric materials. However, polymer dielectrics often present challenges to process integration during fabrication. For example, to replace silicon dioxide as a dielectric in certain applications such as integrated circuits, the polymer dielectric must be able to withstand processing temperatures during metallization and annealing steps of the process. In general, the polymer dielectric material should have a glass transition temperature greater than the processing temperature of subsequent manufacturing steps. Also, the polymer dielectric should not absorb water which may cause an increase in the dielectric constant and potential corrosion of metal conductors.

Polyarylene polymers are well-known as dielectric materials and possess many desirable properties. One class of polyphenylene polymers is polyphenylene ethers prepared by oxidative coupling of at least one hydroxyaromatic compound, such as a phenol. Another class of polyphenylene polymers is prepared by a Diels-Alder reaction of certain alkynyl-substituted aromatic compounds and biscyclopentadienone monomers. Polyphenylene polymers prepared by each method have different polymer architectures. The reaction conditions used in oxidative coupling limits the possible substituents on the hydroxyaromatic compounds, such that post-polymerization functionalization is often required if certain substituents are desired that would be sensitive to the oxidation conditions employed. One drawback of polyphenylene dielectric materials, particularly those formed by a Diels-Alder reaction of certain alkynyl-substituted aromatic compounds and biscyclopentadienone monomers, is that a separate adhesion promoter such as a silicon-containing compound is typically required in order to get good adhesion of the polyphenylene polymer to many substrates. Certain metal-containing substrates, such as zero-valent metal and certain metal oxide surfaces, pose particular challenges for adherence of polyphenylene polymers.

International Pat. App. No. WO 87/07286 discloses certain epoxide-functionalized polyphenylene ethers useful in the preparation of polyphenylene ether copolymers. The polyphenylene ethers in this patent are not prepared by a Diels-Alder reaction and are instead prepared by oxidative coupling of at least one monohydroxyaromatic compound. The epoxide-functionalized polyphenylene ethers comprise a plurality of repeat units of the formula 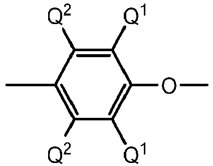 and contain at least one epoxide moiety having the formula 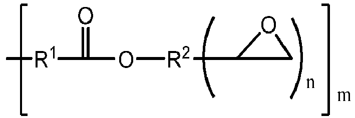 wherein R¹ is a divalent bridging radical containing at least one hydrocarbon group, R² is a polyvalent bridging radical containing at least one hydrocarbon group, m is from 1 to about 5 and n is from 1 to about 10. These polyphenylene ethers are epoxide-functionalized post polymerization, and contain one or two such epoxide moieties bound to the terminal oxygens of the polyphenylene, or contain from 1-5 such epoxide moieties bound to aromatic groups per polyphenylene molecule. Such epoxide-functionalized polyphenylene ethers are useful in the preparation of polyphenylene ether copolymers, which in turn are useful for the compatibilization of polyphenylene ethers with other polymers such as polyesters and polyamides.

There remains a need for polyphenylene polymers having improved adhesion to substrates, particularly inorganic substrates such as metal-containing substrates, such as zero-valent metal and certain metal oxide surfaces.

The inventors have found that Diels-Alder polymerization conditions used to prepare the present polyphenylenes do not present the same substituent limitations that are found in other methods of making polyphenylenes such as in oxidative coupling reactions. The inventors have also found that certain polyarylene polymers having a backbone comprising as repeating units one or more aryl moieties having one or more adhesion-promoting moieties comprising an electron donating atom at least 3 atoms away from the aryl moiety provide good adhesion to inorganic substrate surfaces, such as metal-containing substrates.

The present invention provides a composition comprising: one or more polyarylene polymers comprising as polymerized units one or more polyalkynyl-substituted aryl first monomers and one or more biscyclopentadienone second monomers, the one or more polyarylene polymers having a backbone comprising as repeating units one or more aryl moieties having one or more adhesion-promoting moieties. The adhesion-promoting moieties are pendant from the polymer backbone. The adhesion-promoting moieties comprise an electron donating atom at least 3 atoms away from the aryl moiety to which it is attached.

Also provided by the present invention is a method of improving the adhesion of one or more polyarylene polymers comprising: providing a substrate; coating on a surface of the substrate a layer of a composition comprising one or more polyarylene polymers comprising as polymerized units one or more polyalkynyl-substituted aryl first monomers and one or more biscyclopentadienone second monomers, the one or more polyarylene polymers having a backbone comprising as repeating units one or more aryl moieties having one or more adhesion promoting moieties; and curing the layer of the composition.

The present invention further provides a composition comprising: one or more polyarylene polymers comprising as polymerized units one or more monomers of the formula (1) 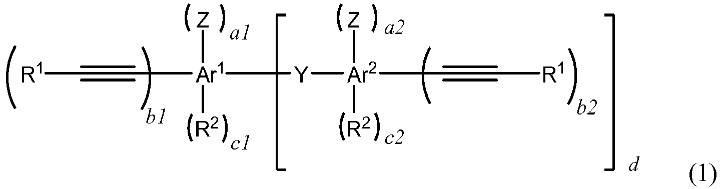 wherein Ar¹ and each Ar² are independently a C₅₋₃₀-aryl moiety; each R¹ is independently chosen from H, C₅₋₃₀-aryl, and substituted C₅₋₃₀ aryl; each R² is independently chosen from C₁₋₁₀-alkyl, C₁₋₁₀-haloalkyl, C₁₋₁₀-alkoxy, CN, and halo; each Z is an adhesion-promoting moiety; Y is a chemical bond or a divalent linking group chosen from -O-, -S-, -S(=O)-, - S(=O)₂-, -C(=O)-, -(C(R⁵)₂)*_{z}*-, C₅₋₃₀-aryl, and -(C(R⁵)₂)*_{z1}*-(C₅₋₃₀ aryl)-(C(R⁵)₂)*_{z2}*-; each R⁵ is independently chosen from H, hydroxy, halo, C₁₋₁₀-alkyl, C₁₋₁₀-haloalkyl, and C₅₋₃₀-aryl; *a1* = 0 to 3; each *a2* = 0 to 3; *b1* = 1 to 4; each *b2* = 0 to 2; *c1* = 0 to 2; each *c2* = 0 to 2; *a1* + *a2* + *a2* = 1 to 6*; b1* + *b2* + *b2* = 2 to 6; *c1* + *c2* + *c2* = 0 to 6; *d* = 0 to 2; *z* = 1 to 10; *z1* = 0 to 10; *z2* = 0 to 10; and *z1* + *z2* = 1 to 10. Still further, the present invention provides a method comprising: providing a substrate; coating a layer of the composition of described above on a surface of the substrate; and curing the layer of the composition to form a cross-linked polyarylene layer.

As used throughout this specification, the following abbreviations shall have the following meanings, unless the context clearly indicates otherwise: °C = degree Celsius; g = gram; mg = milligram; L = liter; mL = milliliter; sec. = second; min. = minute; hr. = hour; DI = deionized; and Da = dalton. Unless otherwise specified, all amounts are percent by weight ("wt%") and all ratios are molar ratios. All numerical ranges are inclusive and combinable in any order, except where it is clear that such numerical ranges are constrained to add up to 100%. The articles "a", "an" and "the" refer to the singular and the plural. "Alkyl" refers to linear, branched and cyclic alkyl unless otherwise specified. "Alkyl" refers to an alkane radical, and includes alkane monoradicals, diradicals (alkylene), and higher-radicals. Unless otherwise noted, "alkyl" includes "heteroalkyl". The term "heteroalkyl" refers to an alkyl group with one or more heteroatoms, such as nitrogen, oxygen, sulfur, silicon, or combinations thereof, replacing one or more carbon atoms within the radical, for example, as in an ether or a thioether. In one preferred embodiment, "alkyl" does not include "heteroalkyl". If no number of carbons is indicated for any alkyl or heteroalkyl, then 1-12 carbons are contemplated. "Halo" refers to fluoro, chloro, bromo, and iodo. When an element is referred to as being "disposed on" another element, it can be directly on the other element or intervening elements may be present therebetween. In contrast, when an element is referred to as being "disposed directly on" another element, there are no intervening elements present.

The terms "aromatic moiety" and "aryl" are used interchangeably. As used herein, "aryl" refers to aromatic carbocycles and aromatic heterocycles. The term "aryl" refers to an aromatic radical, and includes monoradicals, diradicals (arylene), and higher-radicals. It is preferred that aryl moieties are aromatic carbocycles. "Substituted aryl" refers to any aryl moiety having one or more of its hydrogens replaced with one or more substituents chosen from halogen, C₁₋₆-alkyl, halo C₁₋₆-alkyl, C₁₋₆-alkoxy, halo C₁₋₆-alkoxy, phenyl, andphenoxy, preferably from halogen, C₁₋₆-alkyl, halo C₁₋₄-alkyl, C₁₋₆-alkoxy, halo C₁₋₄-alkoxy, and phenyl, and more preferably from halogen, C₁₋₆-alkyl, C₁₋₆-alkoxy, phenyl, and phenoxy. Preferably, a substituted aryl has from 1 to 3 substituents, and more preferably 1 or 2 substituents. As used herein, the term "polymer" includes oligomers. "Polymer" and "resin" are used interchangeably. The term "oligomer" refers to dimers, trimers, tetramers and other polymeric materials that are capable of further curing. By the term "curing" is meant any process, such as polymerization or condensation, that increases the overall molecular weight of a material. "Curable" refers to any material capable of being cured under certain conditions.

As used herein, the term "polyarylenes", "polyarylene polymers", and "polyarylene resins" are used interchangeably and refer to polymers having di- or higher-valent, preferably divalent, aryl moieties in the polymer backbone, and may optionally contain one or more divalent linking groups in the polymer backbone. Preferably, the aryl moieties in the polyarylene backbone are divalent. Suitable divalent linking groups include O, S, S(=O), S(=O)₂, C(=O), C(R^{a})₂, Si(R^{b})₂, C₅₋₃₀-aryl, and combinations thereof, wherein each R^{a} is independently chosen from H, C₁₋₂₀-alkyl, and C₅₋₃₀-aryl, and each R^{b} is independently chosen from H, C₁₋₂₀-alkyl, and C₅₋₃₀-aryl. "Polyarylenes" and "polyphenylenes" are used interchangeably herein.

Compositions of the present invention comprise: one or more polyarylene polymers having a backbone comprising as repeating units one or more aryl moieties having one or more adhesion-promoting moieties, and comprising as polymerized units one or more polyalkynyl-substituted aryl first monomers and one or more biscyclopentadienone second monomers. The adhesion-promoting moieties are pendant from the polyarylene backbone. As used herein, the term "backbone" refers to the main polymer chain. The polyarylene polymers of the invention are prepared using a Diels-Alder reaction of the first and second monomers. The one or more adhesion-promoting moieties may be present on an aryl moiety of the polyalkynyl-substituted aryl first monomer, or on the biscyclopentadienone second monomer, or on both the first monomer and the second monomer. Preferably, the adhesion-promoting moiety is attached to an aryl moiety of the polyalkynyl-substituted aryl first monomer. As used herein, the term "adhesion-promoting moiety" refers to any moiety having one or more adhesion promoting substituents.

The term "adhesion-promoting substituent" refers to any substituent or functional group that improves adhesion of the polyarylene polymer to an inorganic substrate. As used herein, "inorganic substrate" refers to a substrate having an inorganic surface. An "inorganic surface" is a surface having any fraction thereof, preferably a majority of the surface, formed from an inorganic material. Exemplary inorganic substrates include, without limitation: silicon-containing substrates such as silicon, silica, silicon-oxy-nitride, silicon nitride, and silicon carbide; germanium-containing substrates such as silicon-germanium and germanium nitride; gallium-containing substrates such as gallium and gallium nitride; arsenic-containing substrates such as gallium-arsenide; a metal-containing substrate, and combinations thereof. Exemplary metal-containing substrates include, but are not limited to: zero-valent metal such as copper, nickel, tin, silver, indium, tin-silver-copper, tin-bismuth, and the like; metal oxide such as alumina, lanthanum oxide, copper oxide, hafnium oxide, tantalum oxide, and the like; metal nitride such as titanium nitride, tantalum nitride, and the like; metal sulfide; metal carbide; or combinations thereof. Preferred inorganic substrates have a surface formed from silicon-containing materials, zero-valent metals, transition metal oxides, and combinations thereof.

The adhesion-promoting substituents are any substituents or functional groups containing one or more electron-donating atoms at least 3 atoms away from the aryl moiety to which the adhesion-promoting moiety is attached. Preferably, the one or more electron-donating atoms are at least 4 atoms, and more preferably at least 5 atoms, away from the aryl moiety. That is, the electron-donating atom of the adhesion-promoting moiety is bound to the aryl moiety through a linking group having at least 2 atoms, preferably at least 3 atoms and more preferably at least 4 atoms. The number of atoms in the linking group between the electron-donating atom and the aryl moiety to which the adhesion-promoting moiety is attached is at least 2 and may be from 2 to 40, preferably from 2 to 35, more preferably from 3 to 30 and yet more preferably from 3 to 25. Any suitable linking group may be used, such as a C₁₋₄₀-organic residue which may optionally contain one or more heteroatoms chosen from oxygen, nitrogen, sulfur, and combinations thereof, provided that at least 2 atoms are between the aryl moiety and the electron-donating group. It will be appreciated that one or more adhesion-promoting substituents may be connected to the aryl moiety through a single linking group.

Suitable electron-donating atoms useful in the adhesion-promoting substituents are O, N, S, and P, preferably O, N, and P, more preferably O and N, and most preferably O. Combinations of electron-donating atoms may be present in the adhesion-promoting substituent, such as in -P(=O)R₂, -O-P(OR)₂, -O-P(=O)(OR)₂ and -P(=O)-(OR)₂. Suitable adhesion-promoting substituents include, but are not limited to, epoxy groups, hydroxy groups, ether groups, ester groups, keto groups, anhydride groups, siloxy groups, amino groups, imino groups, amide groups, carbamate groups, phosphine groups, phosphite groups, phosphine oxide groups, phosphonate groups, phosphate groups, and the like.

Exemplary adhesion-promoting substituents are epoxy groups such as ethylene oxide groups, propyleneoxide groups and glycidyl ether groups; hydroxy groups such as hydroxy-C₁₋₂₀-alkyl, dihydroxy-C₁₋₂₀-alkyl, trihydroxy-C₁₋₂₀-alkyl, hydroxyaryl, dihydroxyaryl and trihydroxyaryl; ether groups; ester groups such as C₁₋₂₀-alkyl esters, hydroxy-C₁₋₂₀-alkyl esters, amino-C₁₋₂₀-alkyl esters, and glycidyl esters; carboxy groups; keto groups; anhydride groups; siloxy groups; amino groups; imino groups; amide groups; and carbamate groups. Preferred adhesion-promoting substituents are epoxy groups; hydroxy groups; carboxy groups; ester groups; anhydride groups; siloxy groups; and amino groups. Exemplary siloxy groups are those of the formula -SiY₃₋ₓR^{a}ₓ wherein each Y is independently chosen from, hydroxy, C₁₋₁₀ alkoxy, and -O-C(O)-R^{b}; each R^{a} is halo, C₁₋₃₀ hydrocarbyl moiety or substituted C₁₋₃₀ hydrocarbyl moiety; each R^{b} is chosen from H, OH, C₁₋₁₀ alkyl, and C₁₋₁₀ alkoxy; and x = 0-2. Exemplary amino groups have the formula -NR²⁰R²¹, wherein R²⁰ and R²¹ are independently chosen from H, C₁₋₁₀-alkyl, C₆₋₁₀-aryl, and C₇₋₂₀-aralkyl; and wherein R²⁰ and R²¹ may be taken together along with the nitrogen to which they are attached to form a 5- to 7-membered heterocyclic ring. Preferably, at least one of R²⁰ and R²¹ is H. When R²⁰ and R²¹ are taken together to form a ring, such ring may be saturated, unsaturated, or aromatic, and may optionally contain one or more heteroatoms chosen from N and O.

Preferred adhesion-promoting moieties are those of the formula (2)

*-LG(̵APS)*_{w}* (2)

where LG is a linking group; each APS is an adhesion-promoting substituent; w is an integer from 1 to 6; and * is the point of attachment to an aryl moiety. Each APS comprises one or more electron-donating atoms chosen from O, N, S, and P, preferably O, N, and P, more preferably O and N, and most preferably O. It is preferred that w = 1 to 5, more preferably 1 to 3, and still more preferably 1 or 2. Linking group LG is polyvalent, and is preferably divalent, trivalent or tetravalent, and more preferably divalent. It is preferred that LG is an organic radical having 1 to 40 carbon atoms, and more preferably an organic radical having 1 to 30 carbon atoms. The organic radical of LG may optionally contain one or more heteroatoms chosen from O, S, N, and combinations thereof, and preferably contains from 0 to 20 heteroatoms, more preferably from 1 to 16 heteroatoms, and still more preferably from 1 to 10 heteroatoms. LG may be a straight chain, branched chain, or cyclic. LG is selected such that at least one electron-donating atom of the adhesion-promoting substituent is at least 3 atoms away from the aryl moiety. Preferably, at least one electron-donating atom of the adhesion-promoting substituent is at least 4 atoms away, and more preferably at least 5 atoms away from the aryl moiety. Preferably, LG has a chain length of at least 2 atoms between the aryl ring and each APS, more preferably at least 3 atoms, and yet more preferably at least 4 atoms. It will be appreciated that LG may have any suitable number of atoms as long as the electron-donating atom of each adhesion-promoting moiety is at least 3 atoms away from the aryl moiety to which the linking group (LG) is attached.

Suitable adhesion-promoting moieties include, without limitation: -C₁₋₃₀-alkyl-(C(=O)-OH)₁₋₃ such as carboxymethyl (-CH₂-C(=O)-OH), carboxyethyl (-CH₂CH₂-C(=O)-OH), carboxypropyl (-(CH₂)₃-C(=O)-OH), -(OC₂H₂)₁₋₁₀-C(=O)-OH, -(OC₃H₆)₁₋₁₀-C(=O)-OH, and -(O(C₄H₈)₁₋₁₀-C(=O)-OH; -C₂₋₃₀-alkyl-(OH)₁₋₃ such as hydroxyethyl, 2-hydroxypropyl, 3-hydroxypropyl, 2,3-dihydroxypropyl, hydroxycyclohexyl, hydroxycyclopentyl, -(OC₂H₂)₁₋₁₀-OH, -(OC₃H₆)₁₋₁₀-OH, and -(O(C₄H₈)₁₋₁₀-OH; -C₅₋₃₀-aryl-(OH)₁₋₄ such as hydroxyphenyl, dihydroxyphenyl, trihydroxyphenyl, hydroxyquinolyl hydroxynaphthyl, dihydroxynaphthyl, hydroxybiphenyl, dihydroxybiphenyl, and hydroxypyridyl; -O-C₅₋₃₀-aryl-(OH)₁₋₄ such as hydroxyphenoxy, dihydroxyphenoxy, trihydroxyphenoxy, hydroxynaphthyloxy and dihydroxynaphthyloxy; -C₅₋₃₀-aryl-(C(=O)OH)₁₋₄ such as pyridine carboxylic acid, benzene carboxylic acid, benzene dicarboxylic acid, naphthalene carboxylic acid, and naphthalene dicarboxylic acid; (HO-C₁₋₂₀-alkyl)₁₋₂-NR²²₀₋₁- such as hydroxyethylamino (-NH-CH₂CH₂-OH), hydroxypropylamino (-NH-(CH₂)₃-OH), di(hydroxyethyl)amino, and di(hydroxypropyl)amino; (HO-C₁₋₂₀-alkyl)₁₋₂-NR²²0₋₁-C₁₋₂₀-alkyl such as hydroxyethylaminomethyl, hydroxyethylaminoethyl, hydroxyethylyaminopropyl, hydroxypropylaminopropyl, di(hydroxyethyl)aminoethyl, di(hydroxyethyl)aminopropyl, hydroxyethylaminoethoxy, di(hydroxyethyl)aminoethoxy, hydroxypropylaminopropoxy, and di(hydroxypropyl)aminopropoxy; (R²⁰R²¹N)₁₋₃-C₂₋₃₀-alkyl such as aminoethyl, aminopropyl, methylaminoethyl, dimethylaminopropyl, ethylmethylaminopropyl, aminoethoxy, dimethylaminoethoxy, aminopropoxy, and ethylmethylaminoethoxy; (R²⁰R²¹N-C₁₋₂₀-alkyl)₁₋₂-NR²²₀₋₁- such as aminoethylamino, (N-methylaminoethyl)amino, aminopropylamino, di(aminoethyl)amino, and di(aminopropyl)amino; R²⁰R²¹N-C₁₋₂₀alkyl-O- such as aminomethoxy (-O-CH₂-NH₂), aminoethoxy (-O-CH₂CH₂-NH₂), aminopropoxy (-O-(CH₂)₃-NH₂),, and N-methylaminopropoxy; (R²⁰R²¹N)₁₋₃-C₅₋₃₀-aryl such as aminophenyl, aminopyridyl, aminonaphthyl, diaminophenyl, methylaminophenyl, diaminonaphthyl, and aminobiphenyl; (HO-C(=O)-C₁₋₃₀-alkyl)₁₋₂-NH₀₋₁- such as carboxymethylamino, carboxyethylamino, carboxyethyl(N-methyl)amino, carboxypropylamino, bis-(carboxymethyl)amino, and bis(carboxyethyl)amino; (HO-C(=O)-C₁₋₃₀-alkyl)₁₋₂-NH₀₋₁-alkyl such as carboxymethylaminomethyl, carboxyethylaminoethyl, carboxypropyl-aminoethyl, carboxyethylaminoethylamino, bis(carboxymethyl)aminoethyl, bis(carboxymethyl)aminoethylamino, carboxypropylamino-ethylamino, bis(carboxypropyl)-aminopropylamino, and bis(carboxyethyl)aminoethylamino; HO-C₁₋₃₀-alkyl-O-C(=O)-C₁₋₃₀-alkyl such as hydroxyethyl carboxyethyl, -(OC₂H₂)₁₋₁₀-C(=O)-C₁₋₁₀-alkyl-OH, -(OC₃H₆)₁₋₁₀-C(=O)-C₁₋₁₀-alkyl-OH, and -(O(C₄H₈)₁₋₁₀-C(=O)-C₁₋₁₀-alkyl-OH; HO-C₁₋₃₀-alkyl-O-C(=O)-such as hydroxyethyl carboxy and hydroxypropyl carboxy; (C₂H₄O)-CH₂-O-C(=O)-C₁₋₃₀-alkyl such as glycidyl carboxyethyl; (C₂H₄O)-CH₂-O-C(=O)- such as glycidyl carboxy; -C₁₋₃₀-alkyl-(O-CH₂-(C₂H₄O))₁₋₃; (C₂H₄O)-CH₂-O-; -(OC₂H₂)₁₋₁₀-O-CH₂-(C₂H₄O), -(OC₃H₆)₁₋₁₀-O-CH₂-(C₂H₄O), and -(O(C₄H₈)₁₋₁₀-O-CH₂-(C₂H₄O); -C₅₋₃₀-aryl-(O-CH₂-(C₂H₄O))₁₋₄; -O-C₅₋₃₀-aryl-(O-CH₂-(C₂H₄O))₁₋₄; -C₅₋₃₀-aryl-(O-CH₂-(C₂H₄O))₁₋₄; HO-C(=O)-C₁₋₃₀-alkyl-O-C(=O)-C₁₋₃₀-alky -O-C₅₋₃₀-aryl-O-C₅₋₃₀aryl-OH; -O-C₅₋₃₀₋aryl-O-C₅₋₃₀-aryl-(O-CH₂-(C₂H₄O))₁₋₄; -C(=O)-C₁₋₂₀-alkyl-Si(R²³)(R²⁴)₂; -C(=O)-N(R²²)₀₋₁(C₁₋₁₀-alkyl-Si(R²³)(R²⁴)₂)₁₋₂; -C(=O)-C₁₋₂₀-alkyl-N(R²²)₀₋₁(C₁₋₁₀-alkyl-Si(R²³)(R²⁴)₂)₁₋₂; -O-C₁₋₂₀-alkyl-N(R²²)₀₋₁(C₁₋₁₀-alkyl-Si(R²³)(R²⁴)₂)₁₋₂; -O-C₁₋₂₀-alkyl-(Si(R²³)(R²⁴)₂)₁₋₃; and the like; wherein R²⁰ and R²¹ are as described above; R²² = H, C₁₋₁₀-alkyl, or C₆₋₁₀-aryl; each R²³ is independently chosen from OH, C₁₋₂₀-alkoxy, and C₁₋₁₀-carboxyl; each R²⁴ is independently chosen from H, halogen, C₁₋₂₀-alkyl, C₅₋₁₀-aryl and R²³; and (C₂H₄O)-CH₂-O- is a glycidyl ether moiety.

Suitable first monomers useful in the preparation of the polyarylenes of the invention may be any polyalkynyl-substituted aryl, that is, any aryl moiety having two or more alkynyl substituents bound directly to the aryl moiety. When a biscyclopentadienone second monomer containing an aryl moiety having one or more adhesion-promoting moieties is used, the polyalkynyl-substituted aryl first monomer does not need to contain an adhesion-promoting moiety. When a biscyclopentadienone second monomer containing an aryl moiety that does not have one or more adhesion-promoting moieties is used, the polyalkynyl-substituted aryl first monomer must contain one or more adhesion-promoting moieties. It is preferred that the polyalkynyl-substituted aryl first monomer comprises an aryl moiety having one or more adhesion-promoting moieties. Suitable polyalkynyl-substituted aryl first monomers have the general formula (1) 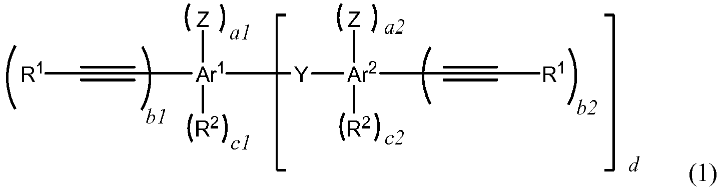 wherein Ar¹ and each Ar² are independently a C₅₋₃₀-aryl moiety; each R¹ is independently chosen from H, C₅₋₃₀-aryl, and substituted C₅₋₃₀-aryl; each R² is independently chosen from C₁₋₁₀-alkyl, C₁₋₁₀-haloalkyl, C₁₋₁₀-alkoxy, CN, and halo; each Z is an adhesion-promoting moiety; Y is a single chemical bond or a divalent linking group chosen from -O-, -S-, -S(=O)-, -S(=O)₂-, -C(=O)-, -(C(R⁵)₂)*_{z}*-, C₅₋₃₀ aryl, and -(C(R⁵)₂)*_{z1}*-(C₅₋₃₀ aryl)-(C(R⁵)₂)*_{z2}*-; each R⁵ is independently chosen from H, hydroxy, halo, C₁₋₁₀-alkyl, C₁₋₁₀-haloalkyl, and C₅₋₃₀-aryl; *a1* = 0 to 3; each *a2* = 0 to 3; *b1* = 1 to 4; each *b2* = 0 to 2; *c1* = 0 to 2; each *c2* = 0 to 2; *a1* + *a2* + *a2* = 1 to 6; *b1* + *b2* + *b2* = 2 to 6; *c1* + *c2* + *c2* = 0 to 6; *d* = 0 to 2; *z* = 1 to 10; *z1* = 0 to 10; *z2* = 0 to 10; and *z1* + *z2* = 1 to 10. Each R¹ is preferably independently chosen from H and C₆₋₂₀-aryl, more preferably from H and C₆₋₁₀-aryl, and yet more preferably from H and phenyl. It is preferred that each R² is independently chosen from C₁₋₁₀-alkyl, C₁₋₁₀-haloalkyl, C₁₋₁₀-alkoxy, and halo, and more preferably from C₁₋₁₀-alkyl, C₁₋₁₀-haloalkyl, and halo. Preferably, Y is a single chemical bond or a divalent linking group chosen from -O-, -S-, -S(=O)-,-S(=O)₂-, -C(=O)-, -(C(R⁵)₂)_{z}-, and C₅₋₃₀-aryl, and more preferably a chemical bond, -O-, -S-, -S(=O)₂-, -C(=O)-, and -(C(R⁵)₂)*_{z}*-. R⁵ is preferably H, halo, C₁₋₁₀-alkyl, halo C₁₋₁₀-alkyl, and C₅₋₃₀-aryl, and more preferably fluoro, C₁₋₆-alkyl, fluoro C₁₋₆-alkyl, and C₆₋₂₀-aryl. Preferably, *a1* = 1 to 3, more preferably 1 to 2, and most preferably *a1* = 1. It is preferred that each *a2* = 0 to 2. Preferably, *a1* + *a2* + *a2* = 1 to 4, more preferably 1 to 3, and yet more preferably 1 to 2. It is preferred that *b1* = 1 to 2, and more preferably 2. It is preferred that each *b2* = 0 or 1. Preferably, *b1* + *b2* + *b2* = 2 to 4, and more preferably 2 or 3, and even more preferably 2. Preferably, *c1* = 0 or 1, and more preferably 0. Each *c2* is preferably 0 or 1, and more preferably 0. Preferably, *c1* + *c2* + *c2* is 0 to 3, more preferably 0 to 2, and even more preferably 0. It is preferred that *d* = 0 or 1, and more preferably 0. Preferably, *z* = 1 to 6, more preferably 1 to 3, and even more preferably *z* = 1. Preferably, *z1* and *z2* are each 0 to 5. It is preferred that *z1* + *z2* = 1 to 6, and more preferably 2 to 6. Z comprises one or more adhesion-promoting substituents having one or more electron-donating atoms chosen from O, N, S, and P, wherein at least one electron-donating atom is at least 3 atoms away from the aryl moiety to which Z is attached. Any of the adhesion-promoting moieties discussed above may suitably be used for Z. More preferably, each Z has the formula (2)

*-LG(̵APS)*_{w}* (2)

wherein LG, APS, *w* and * are as defined above.

Suitable aryl moieties for Ar¹ and Ar² include, but are not limited to, pyridyl, phenyl, naphthyl, anthracenyl, phenanthryl, tetracenyl, pyrenyl, perylenyl, coronenyl, pentacenyl, triphenylenyl, tetraphenyl, benzotetracenyl, biphenyl, binaphthyl, diphenyl ether, and dinaphthyl ether. It is preferred that Ar¹ and Ar² in formula (1) are independently a C₆₋₃₀ aryl moiety. Preferred aryl moieties for Ar¹ and Ar² are phenyl, naphthyl, anthracenyl, phenanthryl, pyrenyl, tetracenyl, pentacenyl, tetraphenyl, triphenylenyl, and perylenyl.

Preferred first monomers of formula (1) are those of formulas (3) and (4): 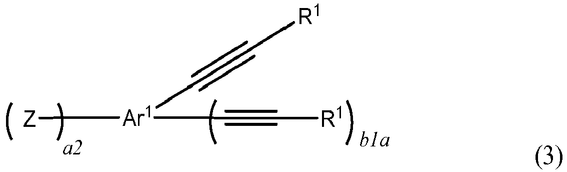 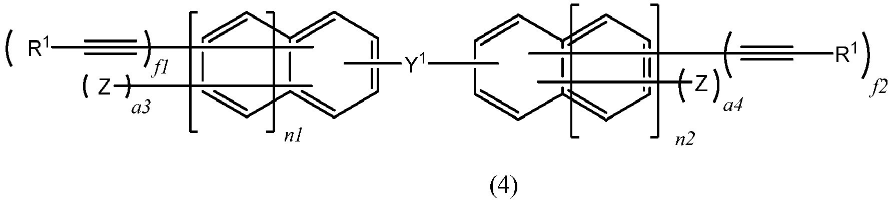 wherein Ar¹, R¹, and Z are as defined above for formula (1); *a2* is 1 to 4; *a3* is 1 or 2; *a4* is 0 to 2; *b1a* is 1 to 4; *f1* is 1 to 4; *f2* is 0 to 4; *f1* + *f2* = 2 to 6; each of *n1* and *n2* is independently 0 to 4; and Y¹ is a single chemical bond, O, S, S(=O)₂, C(=O), C(CH₃)₂, CF₂, and C(CF₃)₂. It will be appreciated by those skilled in the art that the brackets ("[ ]") in formula (4) refer to the number of aromatic rings fused to the phenyl ring. Accordingly, when *n1* (or *n2)* = 0, the aromatic moiety is phenyl; when *n1* (or *n2*) = 1, the aromatic moiety is naphthyl; when *n1* (or *n2) =* 2, the aromatic moiety may be anthracenyl or phenanthryl; when *n1* (or *n2)* = 3, the aromatic moiety may be tretacenyl, tetraphenyl, triphenylenyl, or pyrenyl; and when *n1* (or *n2)* = 4, the aromatic moiety may be perylenyl or benzotetracenyl. In formula (3), *a2* is preferably 1 to 2, and more preferably *a2* = 1. It is preferred that *b1a* in formula (3) is 1 or 2, and more preferably 1. R¹ is preferably H or phenyl. Ar¹ in formula (3) is preferably phenyl, naphthyl, anthracenyl, pyrenyl, tetracenyl, pentacenyl, tetraphenyl, triphenylenyl, and perylenyl. In formula (4), it is preferred that *n1* and *n2* are independently chosen from 0, 1, 3, and 4, more preferably from 0, 1 and 3, and even more preferably from 1 and 3. It is further preferred that *n1* = *n2.* In formula (4), Y¹ is preferably a single chemical bond, O, S(=O)₂, C(=O), C(CH₃)₂, CF₂, and C(CF₃)₂, and more preferably a chemical bond.

Particularly preferred monomers of formula (3) are monomers of formulas (5) to (9): 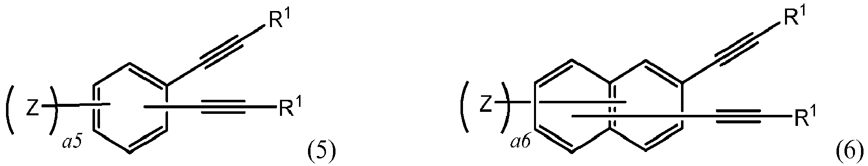 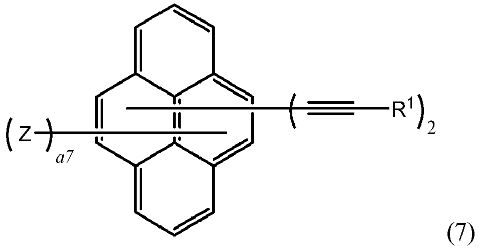 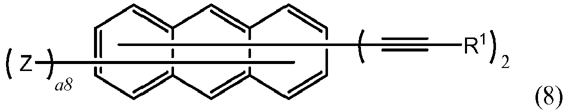 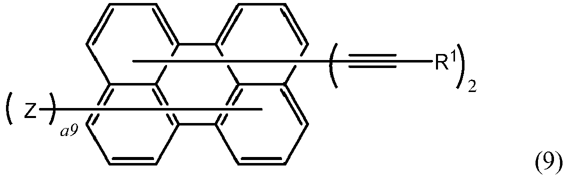 wherein R¹ and Z are as described above for formula (1); and each of *a5, a6, a7, a8* and *a9* is independently 1 to 4. Preferably, *a5* = 1 to 3, more preferably 1 or 2, and yet more preferably 1. It is preferred that *a6* is 1 to 3, more preferably 1 or 2, and even more preferably 1. Preferably, each of *a7* to *a9* is independently 1 to 3, and more preferably 1 to 2.

In the monomers of any of the above formulas (1), and (3) to (9), any two alkynyl moieties on the same aromatic ring may have any relationship to each other, such as an ortho, meta or para relationship. When two alkynyl moieties are on the same aromatic ring, it is preferred that they have a meta or para relationship to each other. Preferably, the alkynyl moieties in the monomers of formulas (1) and (3) to (9) do not have an ortho relationship to each other. Suitable polyalkynyl-substituted aryl first monomers are generally commercially available or may be readily prepared by methods known in the art. Particularly preferred first monomers are: 1,3-diethynylbenzene carboxylic acid glycidyl ester; 1,4-diethynylbenzene carboxylic acid glycidyl ester; 1,3-bis(phenylethynyl)benzene carboxylic acid glycidyl ester; 1,4-bis(phenylethynyl)benzene carboxylic acid glycidyl ester; 1,3-diethynylphenyl glycidyl ether; 1,4-diethynylphenyl glycidyl ether; 1,3-bis(phenylethynyl)phenyl glycidyl ether; 1,4-bis(phenylethynyl)phenyl glycidyl ether; 1,3-diethynylbenzene carboxylic acid hexaethyleneglycol ester; 1,4-diethynylbenzene carboxylic acid hexaethyleneglycol ester; 1,3-bis(phenylethynyl)benzene carboxylic acid hexaethyleneglycol ester; 1,4-bis(phenylethynyl)benzene carboxylic acid hexaethyleneglycol ester; 1,3-diethynylbenzene carboxylic acid diethyleneglycol ester; 1,4-diethynylbenzene carboxylic acid diethyleneglycol ester; 1,3-bis(phenylethynyl)benzene carboxylic acid diethyleneglycol ester; 1,4-bis(phenylethynyl)benzene carboxylic acid diethyleneglycol ester; 1,3-diethynylbenzene carboxylic acid triethyleneglycol ester; 1,4-diethynylbenzene carboxylic acid triethyleneglycol ester; 1,3-bis(phenylethynyl)benzene carboxylic acid triethyleneglycol ester; 1,4-bis(phenylethynyl)benzene carboxylic acid triethyleneglycol ester; 1,3-diethynylbenzene carboxylic acid tripropyleneglycol ester; 1,4-diethynylbenzene carboxylic acid tripropyleneglycol ester; 1,3-bis(phenylethynyl)benzene carboxylic acid tripropyleneglycol ester; 1,4-bis(phenylethynyl)benzene carboxylic acid tripropyleneglycol ester; 1,3-diethynylphenyl hexaethyleneglycol ether; 1,4-diethynylphenyl hexaethyleneglycol ether; 1,3-bis(phenylethynyl)phenyl hexaethyleneglycol ether; 1,4-bis(phenylethynyl)phenyl hexaethyleneglycol ether; 1,3-diethynylphenyl triethyleneglycol ether; 1,4-diethynylphenyl triethyleneglycol ether; 1,3-bis(phenylethynyl)phenyl triethyleneglycol ether; and 1,4-bis(phenylethynyl)phenyl triethyleneglycol ether.

The present polyarylene polymers may be comprised of one polyalkynyl-substituted aryl first monomer, or a mixture of two or more such monomers. Monomers of formula (3) are preferred first monomers. It is preferred that the present polyarylene polymers are comprised of polymerized units of one or more polyalkynyl-substituted aryl first monomers of formula (3). In an alternate preferred embodiment, the present polymers are comprised of polymerized units of one or more monomers of formula (4), or in yet another alternate embodiment of one or more monomers of formula (3) and one or more monomers of formula (4). Mixtures of polymers comprising as polymerized units one or more monomers of formula (1) may suitably be used in the present compositions. It will be appreciated that a combination of one or more polyalkynyl-substituted aryl first monomers having one or more adhesion-promoting moieties and one or more polyalkynyl-substituted aryl first monomers that are free of adhesion-promoting moieties may suitably be used to prepare the present polyarylene polymers. Preferably, a combination of one or more polyalkynyl-substituted aryl first monomers having one or more adhesion-promoting moieties and one or more polyalkynyl-substituted aryl first monomers that are free of adhesion-promoting moieties may suitably be used to prepare the present polyarylene polymers.

Suitable polyalkynyl-substituted aryl first monomers that are free of adhesion-promoting moieties are those described in formulas (1) and (3) to (9) above where each of *a1* to *a9* is 0. Preferred polyalkynyl-substituted aryl first monomers that are free of adhesion-promoting moieties are those of formula (10) 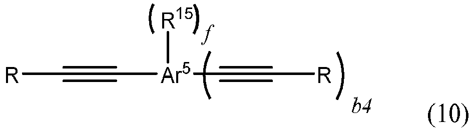 wherein each R is as defined above for the monomers of formula (1); Ar⁵ is a C₅₋₃₀ aromatic moiety; each R¹⁵ is independently chosen from C₁₋₄ alkyl, C₁₋₄ haloalkyl, C₁₋₄ alkoxy, optionally substituted C₇₋₁₄ aralkyl, and optionally substituted C₆₋₁₀ aryl; *b4* = 1 or 2; and *f* = 0 to 4. "Substituted aralkyl" refers to an aralkyl moiety, such as benzyl or phenethyl, having one or more of its hydrogens replaced with one or more substituents chosen from halogen, C₁₋₆-alkyl, C₁₋₆-haloalkyl, C₁₋₆-alkoxy, C₁₋₆-haloalkoxy, phenyl, and phenoxy, preferably from halogen, C₁₋₆-alkyl, C₁₋₄-haloalkyl, C₁₋₆-alkoxy, C₁₋₄-haloalkoxy, and phenyl, and more preferably from halogen, C₁₋₆-alkyl, C₁₋₆-alkoxy, phenyl, and phenoxy. Fluorine is the preferred halogen. In formula (10), it is preferred that each R is independently H or C₆₋₁₀-aryl, and more preferably H or phenyl. It is preferred that each R¹⁵ is independently chosen from C₁₋₄-alkyl, C₁₋₄-fluoroalkyl, C₁₋₄-alkoxy, benzyl, phenethyl, phenyl, naphthyl, substituted phenyl and substituted naphthyl, more preferably C₁₋₂-alkyl, C₁₋₄-fluoroalkyl, C₁₋₂-alkoxy, phenyl, and substituted phenyl, and yet more preferably from C₁₋₂-alkyl, C₁₋₄-fluoroalkyl, C₁₋₂-alkoxy, and phenyl. Preferably, *b4* = 2. Preferably, *f* = 0 to 3, more preferably 0 to 2, and yet more preferably *f* = 0. Ar⁵ may be any suitable C₅₋₃₀-aromatic moiety, such as, without limitation, phenyl, naphthyl, anthracenyl, phenanthryl, tetracenyl, pyrenyl, perylenyl, coronenyl, pentacenyl, triphenylenyl, tetraphenyl, benzotetracenyl, biphenyl, binaphthyl, diphenyl ether, and dinaphthyl ether. Preferably, monomers of formula (10) comprise 2 or 3 alkynyl moieties having a terminal hydrogen or terminal phenyl moiety. Any 2 alkynyl moieties in the monomers of formula (10) may have an ortho, meta or para relationship to each other, and preferably a meta or para relationship to each other. Preferably, the alkynyl moieties do not have an ortho relationship to each other. A single monomer of formula (10) may be used to prepare the present polymers, or two or more monomers of formula (10) but different from each other may be used. When a single monomer of formula (10) is used, it is preferred that *b4* = 2. In one preferred embodiment, the present polymers further comprise as polymerized units a monomer of formula (10), and more preferably a monomer of formula (10) wherein *b4* = 2. In an alternate preferred embodiment, the present polymers further comprise as polymerized units one monomer of formula (10) wherein *b4* = 1, and another monomer of formula (10) wherein *b4* = 2.

Compounds useful as the polyalkynyl-substituted aryl first monomers that are free of adhesion-promoting moieties of formula (10) are generally commercially available, or may be prepared by methods known in the art. Preferred monomers of formula (10) are: 1,3-diethynylbenzene; 1,4-diethynylbenzene; 4,4'-diethynyl-1,1'-biphenyl; 3,5-diethynyl-1,1'-biphenyl; 1,3,5-triethynylbenzene; 1,3-diethynyl-5-(phenylethynyl)benzene; 1,3-bis(phenylethynyl)benzene; 1,4-bis(phenylethynyl)benzene; 1,3,5-tris(phenylethynyl)-benzene; 4,4'-bis(phenylethynyl)-1,1'-biphenyl; 4,4'-diethynyl-diphenylether; and mixtures thereof. More preferably, the monomers of formula (10) are chosen from: 1,3-diethynylbenzene; 1,4-diethynylbenzene; 1,3,5-triethynylbenzene; 4,4'-diethynyl-1,1'-biphenyl; 1,3-bis(phenylethynyl)-benzene; 1,4-bis(phenylethynyl)benzene; 4,4'-bis(phenylethynyl)-1,1'-biphenyl; and mixtures thereof. Even more preferably, the monomers of formula (10) are chosen from: 1,3-diethynylbenzene; 1,4-diethynylbenzene; 4,4'-diethynyl-1,1'-biphenyl; 1,3,5-triethynylbenzene; and mixtures thereof.

Any monomer containing two cyclopentadienone moieties may suitably be used as the second monomer to prepare the polyarylene polymers of the invention. A mixture of 2 or more different monomers, each having two cyclopentadienone moieties, may be used as the second monomer. Such monomers containing two cyclopentadienone moieties are well-known in the art, such as those described in U.S. Pat. Nos. 5,965,679; 6,288,188; and 6,646,081; and in Int. Pat. Pubs. WO 97/10193 and WO 2004/073824. Suitable biscyclopentadienone second monomers may have one or more adhesion-promoting moieties attached to an aryl moiety. Any of the adhesion-promoting moieties described above for the polyalkynyl-substituted aryl first monomers may be used in the biscyclopentadienone second monomers. It is preferred that the biscyclopentadienone second monomers do not have adhesion-promoting moieties. It will be appreciated that a combination of one or more biscyclopentadienone second monomers having one or more adhesion-promoting moieties and one or more biscyclopentadienone second monomers that are free of adhesion-promoting moieties may suitably be used to prepare the present polyarylene polymers.

Preferred biscyclopentadienone second monomers have the structure shown in formula (11) 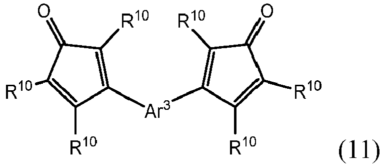 wherein each R¹⁰ is independently chosen from H, C₁₋₆ alkyl, or optionally substituted C₅₋₃₀ aryl; and Ar³ is an aromatic moiety. When such biscyclopentadienone second monomers contain one or more adhesion-promoting moieties, such moieties are typically present on Ar³ or on the aryl moiety of R¹⁰ or both on Ar³ and the aryl moiety of R¹⁰. That is, when R¹⁰ is a substituted aryl, such substituted aryl also includes an aryl having one or more adhesion-promoting moieties described above for formula (1). Preferably, each R¹⁰ is independently chosen from C₃₋₆-alkyl, C₆₋₁₀-aryl and substituted C₆₋₁₀-aryl, more preferably each R¹⁰ is phenyl or substituted phenyl, and even more preferably phenyl. A wide variety of aromatic moieties are suitable for use as Ar³, such as those disclosed in U.S. Pat. No. 5,965,679. Exemplary aromatic moieties useful for Ar³ include those having the structure shown in formula (12) 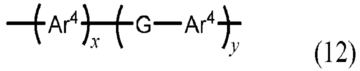 wherein *x* is an integer chosen from 1, 2 or 3; *y* is an integer chosen from 0, 1, or 2; each Ar⁴ is independently chosen from 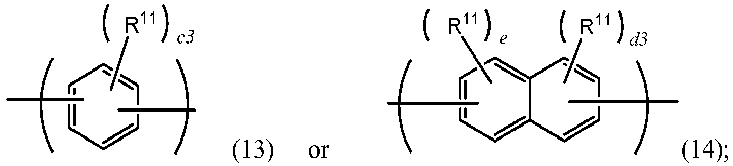 each R¹¹ is independently chosen from halogen, C₁₋₆-alkyl, halo C₁₋₆-alkyl, C₁₋₆-alkoxy, halo C₁₋₆-alkoxy, phenyl, and phenoxy; *c3* is an integer from 0 to 4; each of *d3* and *e* is an integer from 0 to 3; each G is independently chosen from O, S, NR¹², PR¹², P(=O)R¹², C(=O), CR¹³R¹⁴, and SiR¹³R¹⁴; R¹², R¹³, and R¹⁴ are independently chosen from H, C₁₋₄-alkyl, halo C₁₋₄-alkyl, and phenyl. It is preferred that *x* is 1 or 2, and more preferably 1. It is preferred that *y* is 0 or 1, and more preferably 1. Preferably, each R¹¹ is independently chosen from halogen, C₁₋₄-alkyl, halo C₁₋₄-alkyl, C₁₋₄-alkoxy, halo C₁₋₄-alkoxy, and phenyl, and more preferably from fluoro, C₁₋₄-alkyl, fluoro C₁₋₄-alkyl, C₁₋₄-alkoxy, fluoro C₁₋₄-alkoxy, and phenyl. It is preferred that *c3* is from 0 to 3, more preferably from 0 to 2, and yet more preferably 0 or 1. It is preferred that each of *d3* and *e* is independently 0 to 2, and more preferably 0 or 1. In formula (14), it is preferred that *d3* + *e* = 0 to 4, and more preferably 0 to 2. Each G is preferably independently chosen from O, S, NR¹², C(=O), CR¹³R¹⁴, and SiR¹³R¹⁴, more preferably from O, S, C(=O), and CR¹³R¹⁴, and yet more preferably from O, C(=O), and CR¹³R¹⁴. It is preferred that each R¹², R¹³, and R¹⁴ are independently chosen from H, C₁₋₄-alkyl, fluoro C₁₋₄-alkyl, and phenyl; and more preferably from H, C₁₋₄-alkyl, fluoro C₁₋₂-alkyl, and phenyl. Preferably, each Ar⁴ has the formula (13).

Optionally, one or more end capping monomers may be used to prepare the present polyarylene polymers. Such end capping monomers have a single alkyne moiety and a solubility improving polar group and which function to cap one end, preferably two ends, and more preferably all ends, of the present polymers. Suitable end capping monomers are those disclosed in U.S. Pat. App. Publication No. 2016/0060393 (Gilmore et al.). It will be appreciated by those skilled in the art that reaction conditions can be selected such that these optional end capping monomers preferentially react with alkynyl moieties having terminal hydrogens (R = H) in the polymer over alkynyl moieties having terminal aryl moieties (R = C₆₋₂₀-aryl). Preferably, the polar moieties present in these optional end capping monomers are cleavable under conditions used to cure the present polyarylene polymers. Suitable optional end capping monomers are those of formula (15): 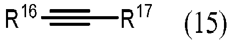 wherein R¹⁶ is H, optionally substituted C₁₋₁₀-alkyl, optionally substituted C₇₋₁₂-aralkyl, optionally substituted C₆₋₁₀-aryl, or R¹⁷; and R¹⁷ is a polar moiety. Suitable polar moieties are any hydrocarbyl moiety having from 1 to 20 carbon atoms and one or more functional groups chosen from -C(=O)-R¹⁸, -C(=O)OR¹⁸, -OH, -NO₂, and -NR¹⁸R¹⁹, where R¹⁸ and R¹⁹ are independently chosen from H, C₁₋₁₀-alkyl, C₇₋₁₆-aralkyl, and C₆₋₁₀-aryl. Preferably, the polar moiety is chosen from -C(=O)-R¹⁸, -C(=O)OR¹⁸, -OH, and -NR¹⁸R¹⁹, and more preferably from -C(=O)-R¹⁸, -C(=O)OR¹⁸, and -OH. Such -C(=O)-, -OH, and -NR¹⁸R¹⁹ functional groups may be part of another functional group, as in carboxylic acids, anhydrides, amides, ketones, esters, and the like. It is preferred that the polar moiety is chosen from carboxyl, C₂₋₁₂-aliphatic carboxylate, hydroxy C₁₋₁₀-alkyl, hydroxy C₆₋₁₀-aryl, C₇₋₂₀-aryl carboxylic acid, C₈₋₂₀-aryl carboxylic acid anhydride, C₇₋₂₀-aryl carboxylates, C₇₋₂₀-aryl amide, C₈₋₂₀-aryl imide, amino C₁₋₁₀-alkyl, and C₆₋₂₀-aryl amine. More preferably, the polar moiety is chosen from carboxyl, C₂₋₁₂-aliphatic carboxylate, hydroxy C₁₋₁₀-alkyl, hydroxy C₆₋₁₀-aryl, C₇₋₁₆-aryl carboxylic acid, and C₈₋₁₆-aryl carboxylic acid anhydride. It will be appreciated by those skilled in the art that when the end-capping monomer comprises a polar moiety having an electron-donating atom is chosen from O, N, S, and P that is at least 3 atoms away from the aryl moiety formed during the end-capping reaction, such polar moiety may also function as an adhesion-promoting moiety. Exemplary end capping monomers are: propiolic acid; acetylene dicarboxylic acid; phenyl propiolic acid; ethynyl benzoic acid; ethynyl phthalic acid; propargyl alcohol; propargylamine; 2-butyn-1,4-diol; 2-methyl-3-butyn-2-ol; 3-butyn-1-ol; 3-butyn-2-ol; 2-butyn-1-ol; 2-butynoic acid; ethynyl phenol; xylityl propiolate; ethynyl phthalic anhydride; ethynyl phthalimide; ethynyl benzamide; 2-butyn-1,4-diol diacetate; 3-butyn-2-one; 1-ethynyl-1-cyclohexanol; 1-ethynylcyclohexylamine; 1-ethynylcyclopentanol; ethynylaniline; N-(ethynylphenyl)acetamide; 2-carbamoyl-5-ethynylbenzoic acid; ethynyl-nitrobenzene; propiolamide; N-hydroxyl-propiolamide; 2-aminobut-3-ynoic acid; and mixtures thereof. Preferred end capping monomers are: propiolic acid; acetylene dicarboxylic acid; phenyl propiolic acid; ethynyl benzoic acid; ethynyl phthalic acid; propargyl alcohol; 2-butyn-1,4-diol; 2-methyl-3-butyn-2-ol; 3-butyn-1-ol; 3-butyn-2-ol; 2-butyn-1-ol; 2-butynoic acid; ethynyl phenol; xylityl propiolate; ethynyl phthalic anhydride; 2-butyn-1,4-diol diacetate; and mixtures thereof. Such end capping monomers are generally commercially available, or may be prepared by methods known in the art.

The polyarylene polymers of the present invention are prepared by reacting one or more polyalkynyl-substituted aryl first monomers described above, one or more biscyclopentadienone second monomers described above, wherein at least one of the first and second monomers comprises an aryl moiety having one or more adhesion-promoting moieties, and optionally one or more additional monomers, such as the monomers of formulas (10) and/or (15) described above, in a suitable organic solvent. The mole ratio of the total first monomers (that is, polyalkynyl-containing monomers) to the total second monomers (that is, monomers containing two cyclopentadienone moieties) is from 1:1.2 to 1.95:1, preferably from 1:1.15 to 1.75:1, and more preferably from 1:1.1 to 1.2:1. When an end-capping monomer, such as the monomer of formula (15), is used, it is typically used in a total amount of from 0.05 to 0.25 moles, based on 1 mole of the second monomer, preferably from 0.075 to 0.2 moles, and more preferably from 0.09 to 0.125 moles. Suitable organic solvents useful to prepare the present oligomers are benzyl esters of C₂₋₆-alkanecarboxylic acids, dibenzyl esters of C₂₋₆-alkanedicarboxylic acids, tetrahydrofurfuryl esters of C₂₋₆-alkanecarboxylic acids, ditetrahydrofurfuryl esters of C₂₋₆-alkanedicarboxylic acids, phenethyl esters of C₂₋₆-alkanecarboxylic acids, diphenethyl esters of C₂₋₆-alkanedicarboxylic acids, aromatic ethers, aromatic hydrocarbons, cyclic hydrocarbons, carbonates, and lactones. Preferred aromatic ethers are diphenyl ether, dibenzyl ether, C₁₋₆-alkoxy-substituted benzenes and benzyl C₁₋₆-alkyl ethers, and more preferably C₁₋₄-alkoxy-substituted benzenes and benzyl C₁₋₄-alkyl ethers. Preferred organic solvents are benzyl esters of C₂₋₄-alkanecarboxylic acids, dibenzyl esters of C₂₋₄-alkanedicarboxylic acids, tetrahydrofurfuryl esters of C₂₋₄-alkanecarboxylic acids, ditetrahydrofurfuryl esters of C₂₋₄-alkanedicarboxylic acids, phenethyl esters of C₂₋₄-alkanecarboxylic acids, diphenethyl esters of C₂₋₄-alkanedicarboxylic acids, C₁₋₆-alkoxy-substituted benzenes, and benzyl C₁₋₆-alkyl ethers, more preferably benzyl esters of C₂₋₆-alkanecarboxylic acids, tetrahydrofurfuryl esters of C₂₋₆-alkanecarboxylic acids, phenethyl esters of C₂₋₆-alkanecarboxylic acids, C₁₋₄-alkoxy-substituted benzenes, benzyl C₁₋₄-alkyl ethers, dibenzyl ether, carbonates, and lactones, and yet more preferably benzyl esters of C₂₋₆-alkanecarboxylic acids, tetrahydrofurfuryl esters of C₂₋₆-alkanecarboxylic acids, C₁₋₄-alkoxy-substituted benzenes, benzyl C₁₋₄-alkyl ethers, carbonates, and lactones. Exemplary organic solvents include, without limitation, benzyl acetate, benzyl proprionate, tetrahydrofurfuryl acetate, tetrahydrofurfuryl propionate, tetrahydrofurfuryl butyrate, anisole, methylanisole, dimethylanisole, dimethoxybenzene, ethylanisole, ethoxybenzene, xylene, mesitylene, cumene, limonene, benzyl methyl ether, benzyl ethyl ether, and propylene carbonate, and preferably benzyl acetate, benzyl proprionate, tetrahydrofurfuryl acetate, tetrahydrofurfuryl propionate, tetrahydrofurfuryl butyrate, anisole, methylanisole, dimethylanisole, dimethoxybenzene, ethylanisole, ethoxybenzene, xylene, mesitylene, cumene, limonene, propylene carbonate, and gamma-butyrolactone.

The polymers of the present invention may be prepared by combining one or more polyalkynyl-substituted aryl first monomers, one or more biscyclopentadienone second monomers, optionally one or more end capping monomers, optionally one or more polyalkynyl-substituted aryl monomers free of an adhesion-promoting moiety, and organic solvent, each as described above, in any order in a vessel, and heating the mixture. The one or more second monomers may be combined with the organic solvent in a vessel, and then the one or more first monomers and any optional additional monomers are added to the mixture. In one embodiment, the one or more second monomers and organic solvent mixture is heated to the desired reaction temperature before the one or more first monomers are added. The polyalkynyl-substituted aryl first monomer may be added over a period of time, such as from 0.25 to 48 hours, and preferably from 1 to 6 hours, to reduce exotherm formation, but is preferably added at one time. The biscyclopentadienone second monomer and organic solvent mixture may be heated to the desired reaction temperature before the first monomer and any optional monomers are added. Alternatively, the biscyclopentadienone second monomer, first monomer, optional polyalkynyl-substituted aryl monomer free of an adhesion promoting moiety, optional end capping monomer and solvent are added to a vessel, and then heated to the desired reaction temperature and held at this temperature for a period of time to provide the desired oligomer. The reaction mixture is heated at a suitable temperature, such as from 85 to 205 °C. Preferably, the mixture is heated to a temperature of 90 to 160 °C, more preferably 95 to 130 °C, and yet more preferably 100 to 130 °C. The reaction may be carried out under oxygen-containing atmosphere, but an inert atmosphere is preferred. Following the reaction, the resulting polyarylene polymer may be isolated from the reaction mixture, diluted with appropriate solvent, or used as is for coating a surface. When a first monomer having 2 alkynyl moieties having terminal hydrogens and 1 alkynyl moiety having a terminal phenyl group is used to prepare the present polymers, heating the monomer reaction mixture at a temperature of 90 to 130 °C will provide an oligomer where substantially only the alkynyl moieties having terminal hydrogens react with the first monomer to form a linear oligomer having 1 or 2 third monomers as end caps, that is, the alkynyl moieties having the terminal phenyl group remain substantially unreacted (< 10%, and preferably < 5%, of such groups react).

The present polyarylene polymers may have any suitable molecular weight range, such as a weight average molecular weight (M_{w}) of from 500 to 250000 Da (as determined by gel permeation chromatography against polystyrene standards), preferably from 1000 to 100000 Da, and more preferably from 2000 to 50000 Da. The choice of organic solvent can be used to tailor the M_{w} of the resulting polymer. For example, when aromatic ether solvents, such as C₁₋₆-alkoxy-substituted benzenes, are used, relatively higher M_{w} oligomers may be obtained as compared to oligomers having a relatively lower M_{w} when the same reaction is performed using a benzyl ester of a C₂₋₆-alkanecarboxylic acid as the organic solvent. The molecular weight of the present oligomers can also be controlled, even in aromatic ether solvents, by adjusting the amount of the first monomer and/or optional monomers. For example, to obtain a polymer having a M_{w} of ≤ 35000, ≥ 1.05 mole of the first monomer should be used for each 1 mole of the second monomer, that is, the mole ratio of total polyalkynyl-substituted aryl monomers to total biscyclopentadienone second monomers should be ≥ 1:1.05, such as from 1:1.075 to 1:1.95. As the optional end-capping monomer has a single alkynyl moiety, it can be used to control the growth of the polymer chain. Increasing the total amount of any end-capping monomer in the reaction will generally provide polymers having relatively lower M_{w}, while decreasing the total amount of any end-capping monomer will provide oligomers having relatively higher M_{w}.

While not intending to be bound by theory, it is believed that the present polyarylene polymers are formed through the Diels-Alder reaction of the cyclopentadienone moieties of the second monomer with the alkynyl moieties of the first monomer and the alkynyl moieties of any optional end-capping monomers upon heating. During such Diels-Alder reaction, a carbonyl-bridged species is believed to form. It will be appreciated by those skilled in the art that such carbonyl-bridged species may be present in the oligomers. Upon further heating, it is believed that the carbonyl bridging species will be essentially fully converted to an aromatic ring system. Due to the mole ratio of the monomers used, the present polymers contain arylene rings in the polymer backbone which are substituted with at least one epoxy-reactive moiety as illustrated in the following reaction Scheme 1, where A is the first monomer and B is the second monomer, wherein polyalkynyl-substituted aryl first monomer A has an adhesion-promoting moiety Z. Not wishing to be bound by theory, it is believed that no unreacted cyclopentadienone moieties remain in the present oligomers.

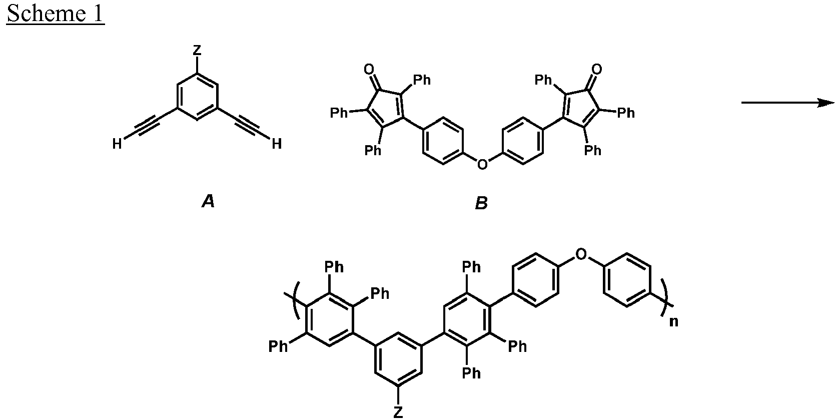

When end-capping monomers are not used, the present polyarylene oligomers have backbone termini independently chosen from alkynyl moieties and cyclopentadienyl moieties. If an excess of the first monomer is used, the polyarylene oligomer backbone will terminate in alkynyl moieties. If an excess of the second monomer is used, the polyarylene oligomer backbone will terminate in cyclopentadienyl moieties. Preferred polyarylene polymers are those having repeating units of the formula (16) 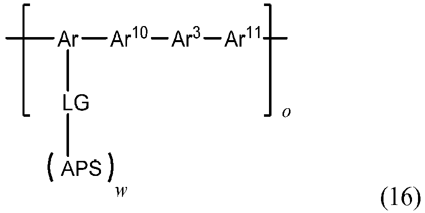 wherein LG, APS, and *w* are as described above in formula (2); Ar is an optionally substituted C₅₋₃₀ aryl moiety; Ar¹⁰ and Ar¹¹ are each independently optionally substituted C₆₋₁₀ aryl moieties; Ar³ is as defined above for formula (11); and *o* is the number of repeat units in the oligomer and is an integer from 2 to 1000. As used herein, "optionally substituted C₅₋₃₀ aryl moiety" refers to both an unsubstituted C₅₋₃₀ aryl moiety and a C₅₋₃₀ aryl moiety having one or more of its aromatic hydrogens replaced with one or more substituents chosen from halogen, C₁₋₁₀-alkyl, C₁₋₁₀-alkoxy, and C₆₋₁₀-aryl.

The present compositions may further comprise one or more crosslinkers, such as polyamine compounds, polyepoxide compounds, polyhydroxy compounds, and polyalkyne compounds. As used herein, the term "polyamine compound" refers to any compound having 2 or more amine moieties capable of reacting with any crosslinkable moiety on the polyarylene oligomer, such as the one or more adhesion promoting moieties, to form a crosslinked polymer. Likewise, the term "polyepoxide compound" refers to any compound having 2 or more epoxide moieties capable of reacting with any crosslinkable moiety on the polyarylene oligomer, such as the one or more adhesion promoting moieties, to form a crosslinked polymer. The term "polyhydroxide compound" refers to any compound having 2 or more hydroxy moieties capable of reacting with any crosslinkable moiety on the polyarylene oligomer, such as the one or more adhesion promoting moieties, to form a crosslinked polymer. Any polyalkyne compound of formulas (1) or (3) to (10) described above may suitably be used as a crosslinker. Preferably, the crosslinkers have from 2 to 6 active crosslinking moieties, that is amine moieties, epoxide moieties, hydroxy moieties or alkyne moieties, respectively, for the polyamine compounds, polyepoxide compounds, polyhydroxy compounds, and polyalkyne compounds. More preferably, the crosslinkers have from 2 to 4, and even more preferably from 2 to 3, active crosslinking moieties. Such crosslinkers are well-known in the art and are generally commercially available from a variety of sources.

Exemplary polyamine crosslinkers are any commercially available polyamine crosslinkers, such as those sold under the PRIMENE brand (available from Dow Chemical Company). Exemplary epoxide moieties include, but are not limited to, glycidyl ether moieties and cyclohexene oxide moieties. Suitable epoxide-containing crosslinkers include, without limitation: diglycidyl ethers of bisphenols such as bisphenol A diglycidyl ether, bisphenol E diglycidyl ether, bisphenol F diglycidyl ether, bisphenol S diglycidyl ether, bisphenol BP diglycidyl ether, bisphenol AF diglycidyl ether, bisphenol AP diglycidyl ether, and oligomeric bisphenol diglycidyl ethers; glycidyl ethers of polyols, such as 1,4-butanediol diglycidyl ether, 2-methyl-1,3-propanediol diglycidyl ether, 2,2-dimethyl-1,3-propanediol diglycidyl ether, glycerol triglycidyl ether, 1,4-cyclohexanedimethanol diglycidyl ether, trimethylolpropane triglycidyl ether, triphenylolmethane triglycidyl ether, bis(naphthyldiol)methane tetraglycidyl ether, resorcinol diglycidyl ether, 4,4'-biphenol diglycidyl ether, and trihydroxybenzene triglycidyl ether; glycidyl esters of polycarbocylic acids such as diglycidyl benzenedicarboxylate, triglycidyl benzenetricarboxylate, diglycidyl decanedicarboxylate, diglycidyl dodecanedicarboxylate, diglycidyl hexadecanedicarboxylate, diglycidyl octadecanedicarboxylate, diglycidyl eicosanedicarboxylate, and diglycidyl hexatridecanedicarboxylate; epoxidized natural oils such as castor oil triglycidyl ether; glycidyl ethers of polyether polyols such as triglycidyl ether of propoxylated glycerol, triglycidyl ether of ethoxylated glycerol, and triglycidyl of ethoxylated-propoxylated glycerol; epoxidized polyarylene polymers; epoxidized (meth)acrylate polymers and copolymers such as those comprising as polymerized units glycidyl acrylate and/or glycidyl methacrylate; and epoxidized siloxanes such as partially condensed silsesquioxanes having a plurality of cyclohexene oxide moieties, and polyoctahedral sislsesquioxanes having a plurality of cyclohexene oxide moieties. Suitable silicon-containing monomers useful in preparing epoxidized siloxanes have the structure 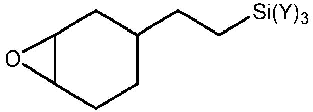 where Y is H, halogen, C₁₋₆ alkoxy, or C₁₋₆ carboxylate. Suitable epoxide-containing crosslinkers are generally commercially available or may be prepared by methods known in the literature.

The present compositions comprise one or more of the present polyarylene polymers, optionally one or more crosslinkers, and optionally one or more organic solvents. Preferably, the present compositions are free of polyester resins. Preferably, the compositions comprise one or more organic solvents. Any solvent which dissolves the polyarylene polymer and epoxide-containing crosslinker may suitably be used in the present composition. Exemplary organic solvents are those typically used in the electronics industry, such as propylene glycol methyl ether (PGME), dipropylene glycol methyl ether (DPGME), propylene glycol methyl ether acetate (PGMEA), methyl 3-methoxypropionate (MMP), ethyl lactate, n-butyl acetate, anisole, N-methyl pyrrolidone, gamma-butyrolactone (GBL), ethoxybenzene, benzyl propionate, benzyl benzoate, propylene carbonate, xylene, cumene, limonene, mesitylene, and mixtures thereof. Mixtures of organic solvents are particularly preferred, such as a mixture comprising one or more of anisole, ethoxybenzene, PGME, PGMEA, GBL, MMP, n-butyl acetate, benzyl propionate and benzyl benzoate in combination with one or more additional organic solvents, and more preferably a mixture comprising two or more of anisole, ethoxybenzene, PGME, PGMEA, GBL, MMP, n-butyl acetate, benzyl propionate, and benzyl benzoate. When a mixture of solvents is used, the ratio of solvents is generally not critical and may vary from 99:1 to 1:99 w/w.

Any amount of the present polyarylene polymers may be used in the compositions of the invention. The optional crosslinkers are typically used in an amount of from 0 to 50 wt% based on the weight of the polyarylene polymer, preferably from 1 to 50 wt%, and more preferably from 3 to 40 wt%. When the compositions of the invention comprise one or more organic solvents, the polyarylene polymers are typically present in an amount of 0.5 to 40 wt%. It will be appreciated by those skilled in the art that the concentration of the polyarylene polymer in the composition may be varied over a wide range depending on the particular application and coating method. The determination of suitable concentrations is within the ability of those skilled in the art.

The present compositions may further optionally contain one or more additives, such as curing agents and surface leveling agents. The selection of such optional additives and their amounts are well within the ability of those skilled in the art. Curing agents are typically present in an amount of from 0 to 20 wt% based on total solids, and preferably from 0 to 3 wt%. Surface leveling agents are typically used in an amount of from 0 to 5 wt% based on total solids, and preferably from 0 to 1 wt%.

Curing agents may optionally be used in the present compositions to aid in the curing of the deposited polymer film. A curing agent is any component which causes curing of the polymer on the surface of a substrate. Preferred curing agents are acids and thermal acid generators. Suitable acids include, but are not limited to: arylsulfonic acids such as p-toluenesulfonic acid; alkyl sulfonic acids such as methanesulfonic acid, ethanesulfonic acid, and propanesulfonic acid; perfluoroalkylsulfonic acids such as trifluoromethanesulfonic acid; and perfluoroarylsulfonic acids. A thermal acid generator is any compound which liberates acid upon exposure to heat. Thermal acid generators are well-known in the art and are generally commercially available, such as from King Industries, Norwalk, Connecticut. Exemplary thermal acid generators include, without limitation, amine blocked strong acids, such as amine blocked sulfonic acids such as amine blocked dodecylbenzenesulfonic acid. It will also be appreciated by those skilled in the art that certain photoacid generators are able to liberate acid upon heating and may function as thermal acid generators.

The present compositions may optionally include one or more surface leveling agents (or surfactants). While any suitable surfactant may be used, such surfactants are typically non-ionic. Exemplary non-ionic surfactants are those containing an alkyleneoxy linkage, such as ethyleneoxy, propyleneoxy, or a combination of ethyleneoxy and propyleneoxy linkages.

Compositions of the invention may be used to form a polymer film in a variety of applications. For example, the present compositions may be coated on an electronic device substrate by any suitable means, such as spin-coating, slot-die coating, doctor blading, bar coating, curtain coating, roller coating, spray coating, dip coating, and the like. Spin-coating is preferred. In a typical spin-coating method, the present compositions are applied to a substrate which is spinning at a rate of 500 to 4000 rpm for a period of 15 to 90 seconds to obtain a desired layer of the composition on the substrate. It will be appreciated by those skilled in the art that the height of the layer may be adjusted by changing the spin speed.

A wide variety of electronic device substrates may be used in the present invention, such as: packaging substrates such as multichip modules; flat panel display substrates such as flat panel display substrates and flexible display substrates; integrated circuit substrates; substrates for light emitting diodes (LEDs) including organic light emitting diodes (OLEDs); semiconductor wafers; polycrystalline silicon substrates; and the like. Such substrates are typically composed of one or more of silicon, polysilicon, silicon oxide, silicon nitride, silicon oxynitride, silicon germanium, gallium arsenide, aluminum, sapphire, tungsten, titanium, titanium-tungsten, nickel, copper, and gold. Suitable substrates may be in the form of wafers such as those used in the manufacture of integrated circuits, optical sensors, flat panel displays, integrated optical circuits, and LEDs. As used herein, the term "semiconductor wafer" is intended to encompass "an electronic device substrate," "a semiconductor substrate," "a semiconductor device," and various packages for various levels of interconnection, including a single-chip wafer, multiple-chip wafer, packages for various levels, or other assemblies requiring solder connections. Such substrates may be any suitable size, such as wafers having a diameter of 200 mm to 300 mm. As used herein, the term "semiconductor substrate" includes any substrate having one or more semiconductor layers or structures which include active or operable portions of semiconductor devices. A semiconductor device refers to a semiconductor substrate upon which at least one microelectronic device has been or is being batch fabricated. Preferred substrates are display substrates and semiconductor substrates.

Films formed from the present polyarylene resins have improved adhesion to inorganic substrates, such as metal-containing substrates, as compared to conventional polyarylene polymers free of adhesion-promoting moieties. Even though the films formed from the present polymers have improved adhesion, a layer of a conventional adhesion promoter may optionally be applied to the substrate surface before the deposition of the polyarylene oligomer layer, which is subsequently cured to form a cured polyarylene film. If it is desired to use a separate adhesion promoter, any suitable adhesion promoter for polyarylene films may be used, such as silanes, preferably organosilanes such as trimethoxyvinylsilane, triethoxyvinylsilane, hexamethyldisilazane [(CH₃)₃Si-NH-Si(CH₃)₃], or an aminosilane coupler such as gamma-aminopropyltriethoxysilane, or a chelate such as aluminum monoethylacetoacetatedi-isopropylate [((i-C₃H₇O)₂Al(OCOC₂H₅CHCOCH₃))]. In some cases, the adhesion promoter is applied from 0.01 to 5 wt% solution, excess solution is removed, and then the polyarylene oligomer is applied. In other cases, for example, a chelate of aluminum monoethylacetoacetatedi-isopropylate, can be incorporated onto a substrate by spreading a toluene solution of the chelate on a substrate and then baking the coated substrate at 350 °C for 30 min. in air to form a very thin (for example 5 nm) adhesion promoting layer of aluminum oxide on the surface. Other means for depositing aluminum oxide are likewise suitable. Alternatively, the adhesion promoter, in an amount of, for example, from 0.05 to 5 wt% based on the weight of the polyarylene oligomer, can be added to the present compositions, negating the need for formation of an additional layer. Particularly suitable adhesion promoters include those sold under the AP 3000, AP 8000, and AP 9000S designations, available from Dow Electronic Materials (Marlborough, Massachusetts).

After being coated on the substrate, the polyarylene resin layer is optionally baked at a relatively low temperature to remove any organic solvent and other relatively volatile components from the layer. Typically, the substrate is baked at a temperature of 90 to 140 °C, although other suitable temperatures may be used. The baking time is typically from 10 seconds to 10 minutes, and preferably from 30 seconds to 5 minutes, although longer or shorter times may be used. When the substrate is a wafer, such baking step may be performed by heating the wafer on a hot plate. Following solvent removal, a layer, film or coating of the polyarylene resin and any optional crosslinker and any other optional component on the substrate surface is obtained.

Next, the layer of the polyarylene resin is cured to form a polyarylene film. When an optional crosslinker is used, such curing step forms a crosslinked polyarylene film. Any suitable curing step may be employed, such as heating. Preferably, the layer is cured by heating at a temperature of ≥150 °C, more preferably at a temperature of 150 to 250 °C, and more preferably 160 to 225 °C. The cured polyarylene films may be used as is, or may be further processed as needed, depending on the application. Such further processing steps are conventional and include, for example, the steps of etching and metalizing, and are well known to those skilled in the art.

In the following examples, weight average molecular weight (M_{w}) was determined by gel permeation chromatography (GPC) against polystyrene standards, and number average molecular weight (Mₙ) was determined by GPC using a dynamic light scattering/refractive index (DLS/RI) sensor. Polydispersity index (PDI) was calculated as M_{w}/Mₙ.

Example 1. To an oven-dried single-necked 1000 mL round-bottomed flask containing a stir bar, 3,5-diethynylbenzoic acid (DEBzOH, 10.00 g, 58.76 mmol) and dimethylformamide (DMF, 0.04 g, 0.59 mmol) were added via powder funnel, followed by dichloromethane (250 mL). The reaction was stirred gently at room temperature under a flowing blanket of nitrogen for 20 minutes before cooling in an ice water bath for 30 minutes. Oxalyl chloride (8.15 g, 64.64 mmol) was added dropwise via syringe, and the clear, light orange reaction mixture turned dark brown and opaque. The mixture was allowed to warm to room temperature as the ice bath melted. After stirring overnight, the stir bar was removed from the flask, and the solvent was removed by rotary evaporation. The dark, viscous mixture was further concentrated on a vacuum line to remove any residual oxalyl chloride, during which time the mixture solidified. A stir bar was added, the contents of the flask were redissolved in dichloromethane (250 mL), and a liquid addition funnel was attached to the flask. The vessel was again cooled in an ice water bath for 20 minutes. Simultaneously, a separate oven-dried 500 mL round-bottomed flask with a stir bar was charged with dimethylaminopyridine (DMAP, 0.07 g, 0.59 mmol) and dichloromethane (250 mL) before triethylamine (17.79 g, 176.29 mmol) and glycidol (4.79 g, 64.64 mmol) were added by syringe, and this mixture was allowed to stir at room temperature under nitrogen while the adjacent flask was cooling. The contents of this second flask were transferred to the addition funnel, and added to the cooled flask over 1 hour. This flask was allowed to warm to room temperature over 2 hours, and then stirred for another 24 hours. The reaction was stopped by adding 500 mL of water and extracting with two portions of 250 mL dichloromethane. The combined organic layers were washed with saturated aqueous sodium chloride, dried over sodium sulfate, and filtered. Concentration of the eluent yielded a brown solid, which was suspended on silica gel and separated using a CombiFlash automated purification system and an ethyl acetate/heptanes solvent system to furnish 3,5-diethynylbenzoic acid glycidyl ester (DEBzOH-GE) as a pale yellow solid (8.77g, 38.78 mmol, 66% yield). The structure of the monomer was confirmed by ¹H and ¹³C NMR. The reaction is illustrated in Scheme 2.

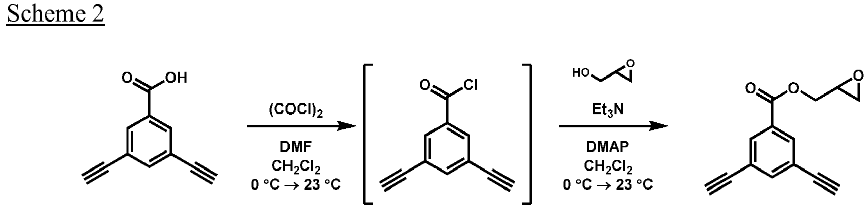

Example 2. To an oven-dried single-necked 500 mL round-bottomed flask containing a stir bar, DEBzOH (2.01 g, 11.81 mmol) and hexa(ethylene glycol) (10.0 9, 35.42 mmol) were added before the addition of toluene solvent (350 mL) and *p*-toluenesulfonic acid catalyst (0.01 g, 0.07 mmol). A large excess of hexa(ethylene glycol) was used to prevent dimerization. A Dean-Stark trap and reflux condenser with chilled water were affixed to the top of the flask, and the mixture was heated with an aluminum heating block to an external temperature of 140 °C under a flowing blanket of nitrogen. The reaction was stirred at this temperature for 48 hours, during which time water collected in the bottom of the trap. After this period, the reaction was cooled, and the contents were added to 300 mL ethyl acetate, and washed with five 500 mL portions of water. The organic layer was washed again with saturated aqueous sodium chloride, dried over sodium sulfate, and filtered. Concentration of the eluent yielded an orange solid, which was suspended on silica gel and separated using a CombiFlash automated purification system and an ethyl acetate/heptanes solvent system to furnish 3,5-diethynylbenzoic acid hexa(ethylene glycol) ester (DEBzOH-HEG) as a pale yellow solid (2.2 g, 5.01 mmol, 42% yield). The structure of the monomer was confirmed by ¹H and ¹³C NMR. The reaction is illustrated in Scheme 3.

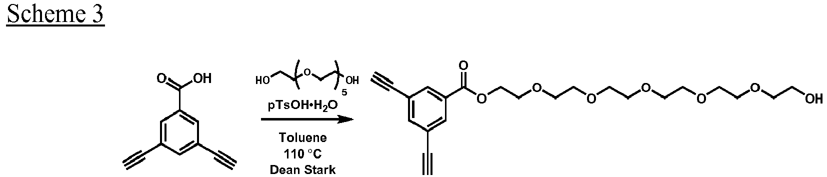

Example 3. To a multineck round-bottomed flask containing a stir bar, diphenylene oxide bis(triphenylcyclopentadienone) (DPO-CPD, 3.15 g, 4.02 mmol) and DEBzOH-GE (1.00 g, 4.42 mmol) from Example 1 were added via powder funnel, followed by PGMEA (40 mL). The reaction was stirred gently at room temperature. The flask was next equipped with a reflux condenser and an internal thermocouple probe attached to a self-regulating thermostat control for a heating mantle. Next, the dark maroon contents of the flask were warmed to an internal temperature of 110 °C and maintained at this temperature for 72 hours before cooling to 25 °C by removal of the heating element. The resulting maroon solution was precipitated from PGMEA using 500 mL isopropyl alcohol as an antisolvent. Filtration and drying of the precipitate under vacuum overnight yielded Polymer 1 as a white powder. GPC analysis of the resulting material indicated an Mₙ of 8782 Da, a M_{w} of 48367 Da, and a PDI of 5.51. This reaction is illustrated in Scheme 4.

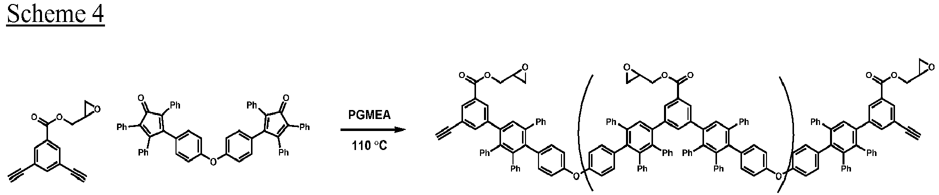

Example 4. To a multineck round-bottomed flask containing a stir bar, DPO-CPD (1.72 g, 2.19 mmol) and DEBzOH-HEG from Example 2 (1.00 g, 2.30 mmol) were added via powder funnel, followed by PGMEA (30 mL). The reaction was stirred gently at room temperature. The flask was next equipped with a reflux condenser and an internal thermocouple probe attached to a self-regulating thermostat control for a heating mantle. Next, the dark maroon contents of the flask were warmed to an internal temperature of 105 °C and maintained at this temperature for 72 hours before cooling to 25 °C by removal of the heating element. The resulting maroon solution was precipitated from PGMEA using 500 mL isopropyl alcohol as an antisolvent. Filtration and drying of the precipitate under vacuum overnight yielded Polymer 2 as a white powder. GPC analysis indicated an Mₙ of 10709 Da, an M_{w} of 24442 Da, and a PDI of 2.28. This reaction is illustrated in Scheme 5.

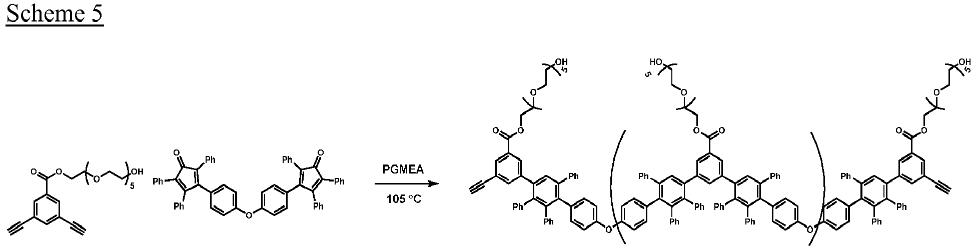

Example 5. To an oven-dried single-necked 100 mL round-bottomed flask containing a stir bar, 3,5-diethynylphenol (DEP), tetrabutylammonium iodide (TBAI) and tetrahydrofuran (THF) are added via funnel, followed by triethylamine. The reaction is stirred gently at room temperature under a flowing blanket of nitrogen for 20 minutes before cooling in an ice water bath for 30 minutes. Epichlorohydrin is pre-dissolved in THF and is added dropwise into the reaction via syringe. The mixture is allowed to warm to room temperature as the ice bath melts, and is stirred overnight. The reaction is stopped by adding 500 mL of neutral aqueous buffer and extracting with two portions of 250 mL dichloromethane. The combined organic layers are washed with water and are then washed saturated aqueous sodium chloride, dried over sodium sulfate, and filtered. Concentration of the eluent and separation by neutral silica gel chromatography is expected to furnish 3,5-diethynylphenoxy glycidyl ether (DEP-GE).

Example 6. Polyalkynyl-substituted aryl monomers of the invention are expected to be prepared according to the general procedure of Examples 1 or 2 except that DEBzOH and/or the hexa(ethylene glycol) are replaced by the reactants identified in Table 1.

**Table 1**

| **Monomer** | **Reactant 1** | **Reactant 2** | **Procedure** |
|---|---|---|---|
| DEBzOH-DEG | DEBzOH | Diethylene glycol | Example 2 |
| DEBzOH-TEG | DEBzOH | Triethylene glycol | Example 2 |
| DEBzOH-Gly | DEBzOH | Glycerol | Example 2 |
| DEBzOH-EA | DEBzOH | Ethanolamine | Example 2 |
| DEBzOH-PA | DEBzOH | Propanolamine | Example 2 |
| DEBzOH-DEA | DEBzOH | Diethanolamine | Example 2 |

Example 7. Polyarylene oligomers of the invention are expected to be prepared according to the general procedure of Examples 3 or 4 except that the polyalkynyl-substituted aryl monomers having an adhesion-promoting moiety reported in Table 2 are reacted with DPO-CPD. In Table 2, where 2 or more monomers are used, the reported ratios are molar ratios, Abbreviations used in Table 6 and not defined elsewhere herein are: 1,3-DEB = 1,3-di(ethynyl)benzene; 1,4-DEB = 1,4-di(ethynyl)benzene; and TRIS = 1,3,5-tris(phenylethynyl)-benzene.

**Table 2**

| **Polymer** | **Polyalkynyl-substituted Aryl Monomer** | **Procedure** |
|---|---|---|
| 3 | DEP-GE | Example 4 |
| 4 | DEP-GE + 1,3-DEB (1.5:1) | Example 4 |
| 5 | DEBzOH-DEA | Example 3 |
| 6 | DEBzOH-DEA + TRIS (2:1) | Example 4 |
| 7 | DEBzOH-TEG + 1,4-DEB (1.7:1) | Example 4 |
| 8 | DEBzOH-GE + 1,3-DEB (1.2:1) | Example 3 |
| 9 | DEBzOH-HEG + TRIS (1:1) | Example 4 |
| 10 | DEBzOH-Gly | Example 4 |
| 11 | DEBzOH-PA + 1,3-DEB (2:1) | Example 4 |

Comparative Example. To a three neck round-bottomed flask containing a stir bar were added DPO-CPD (25 g, 31.9 mmol), DEBzOH (1.09 g, 6.4 mmol) and GBL (88g). The reaction mixture was stirred gently at room temperature. The flask was next equipped with a reflux condenser and an internal thermocouple probe attached to a self-regulating thermostat control for a heating mantle. Next, the dark maroon contents of the flask were warmed to an internal temperature of 160 °C and maintained at this temperature for 4 hours before cooling to about 100 °C by removal of the heating element. Next, TRIS (9.66g, 25.5 mmol) was added slowly to the reaction. The resulting maroon solution was heated to 203 °C and stirred at this temperature for 47 hrs. GPC analysis of the reaction product (Comparative Polymer 1) indicated an Mₙ of 8434 Da, an M_{w} of 26395 Da, and a polydispersity of 3.13.

Example 8. Crosslinkable formulations were prepared by combining Polymer 1 in PGMEA at 10% solids with an amount of PRIMENE™ MD cyclic diamine crosslinker. Sample 1 contained a 1:10 by weight mixture of crosslinker to Polymer 1 and Sample 2 contained a 1:50 mixture of crosslinker to Polymer 1. A Control Sample of only Polymer 1 in PGMEA was also prepared. A 1 g portion of each of Sample 1, Sample 2 and the Control Sample were added to separate 20mL scintillation vials. The vials were warmed in a heating block to 100 °C without a cap, allowing the PGMEA to evaporate, and a thick film to form on the bottom of the vials. The temperature of the heating block was raised to 165 °C, and the vials were kept at this external temperature for 1 hour. Next, 10 g of tetrahydrofuran (THF) was added to each vial. After contacting the film for 18 hours, an aliquot of the THF was diluted 2:98 for GPC sampling. For both Samples 1 and 2, the GPC analysis showed no polymer, indicating that solvent-resistant, crosslinked films had formed. Analysis of the Control Sample by GPC showed negligible change in molecular weight of Polymer 1, indicating that Polymer 1 was not crosslinked.

Example 9. Films of the polymers reported in Table 3 were formed on both silicon and molybdenum-coated glass substrates by spin-coating compositions of the polymers in PGMEA (10% solids) at 1000 rpm for 90 seconds. Following deposition, the films were softbaked at 110 °C for two minutes to remove most of the solvent prior to curing. The films were then cured under nitrogen in a belt furnace at 400 °C for one hour (belt speed was 25 mm per minute). Adhesion tests of the films were carried out using a standard cross-hatch method in which a lattice pattern was cut through the cured film using a cross-hatch cutter having six teeth spaced at 2.0 mm (Model P-A-T (PA2058) available from Paul N. Gardner Co., Inc.), exposing the substrate along the cut lines. The patterned area was briefly cleaned by exposure to pressurized air to remove any loose debris from the film surface. SCOTCH™ brand transparent tape (available from 3M) was firmly applied to the cross-hatch test area, and then quickly removed by peeling the tape off the film. The film was then examined under a microscope and adhesion was assessed on a scale from 0B to 5B using ASTM D3002 and D3359. In these adhesion tests, 0B indicates almost complete film loss and 5B indicates zero film loss. The results are reported in Table 3.

**Table 3**

| **Polymer Film** | **Adhesion Rating On Silicon** | **Adhesion Rating On Molybdenum** |
|---|---|---|
| Polymer 1 | 5B | 5B |
| Polymer 2 | 5B | 5B |
| Comparative Polymer 1 | 4B | 4B |

Example 10. The general procedure of Example 9 was repeated on silicon wafers using Samples 3 and 4 and Control Sample 2. Sample 3 was prepared by combining Polymer 1 in PGMEA at 10% solids with an amount of PRIMENE™ MD cyclic diamine crosslinker in a weight ratio of 100:1 of Polymer 1 to crosslinker. Sample 4 was prepared by combining Polymer 1 in PGMEA at 10% solids with an amount of PRIMENE™ MD cyclic diamine crosslinker in a weight ratio of 100:10 of Polymer 1 to crosslinker. Control Sample 2 was prepared by combining Polymer 1 in PGMEA at 10% solids. Duplicate films of each of Samples 3 and 4 and Control Sample 2 were formed on separate silicon wafers according to the procedure of Example 9. A lattice pattern was cut through each of the cured films using a cross-hatch cutter according to Example 9, exposing the substrate along the cut lines. One set of films of each of the samples was evaluated according to the procedure of Example 9 and the adhesion results are reported in Table 4.

A second set of films of each of the samples was scored with a lattice pattern according to Example 9, but was then immersed in a conventional polymer remover solution comprising a mixture of N-methylpyrrolidone, an alkanolamine, and N-methylformamide in DPGME heated in a 70 °C water bath. After being immersed for 3 minutes, the samples were removed from the remover solution and rinsed with DI water for 10 seconds. Excess water was removed by gently patting the samples with paper towels followed by exposure to compressed air. Next, the samples were evaluated for adhesion according to the procedure of Example 9. These adhesion results (after exposure to a polymer remover) are reported in Table 4.

**Table 4**

| **Polymer Film** | **Adhesion Rating** | **Adhesion Rating After Exposure** |
|---|---|---|
| Control Sample 2 | 5B | 1B |
| Sample 3 | 5B | 1B |
| Sample 4 | 5B | 5B |

As can be seen from Table 4, the polymer film from Sample 4 shows excellent adhesion even after exposure to a conventional polymer remover solution.

## Claims

1. A composition comprising: one or more polyarylene polymers comprising as polymerized units one or more polyalkynyl-substituted aryl first monomers and one or more biscyclopentadienone second monomers, the one or more polyarylene polymers having a backbone comprising as repeating units one or more aryl moieties having one or more adhesion promoting moieties.

2. The composition of claim 1 wherein the adhesion-promoting moiety improves adhesion of the polyarylene oligomer to an inorganic surface.

3. The composition of claim 1 wherein the adhesion-promoting moiety comprises an electron-donating atom at least 3 atoms away from the aryl moiety.

4. The composition of claim 3 wherein the electron-donating atom is chosen from O, N, S, and P.

5. The composition of claim 4 wherein the adhesion-promoting moiety comprises one or more adhesion-promoting substituents chosen from epoxy groups, hydroxy groups, ether groups, ester groups, keto groups, siloxy groups, amino groups, imino groups, phosphine groups, phosphite groups, phosphine oxide groups, phosphonate groups, and phosphate groups.

6. The composition of claim 5 wherein the one or more adhesion-promoting substituents are chosen from are epoxy groups; hydroxy groups; carboxy groups; ester groups; siloxy groups; and amino groups

7. The composition of claim 1 further comprising one or more crosslinkers.

8. The composition of claim 7 wherein the one or more crosslinkers is chosen from polyamine compounds, polyepoxide compounds, and polyhydroxy compounds.

9. The composition of claim 1 further comprising one or more organic solvents.

10. The composition of claim 1 wherein at least one polyalkynyl-substituted aryl first monomer has the formula 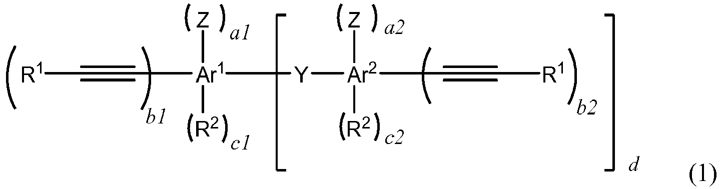 wherein Ar¹ and each Ar² are independently a C₅₋₃₀-aryl moiety; each R¹ is independently chosen from H, C₅₋₃₀-aryl, and substituted C₅₋₃₀ aryl; each R² is independently chosen from C₁₋₁₀-alkyl, C₁₋₁₀-haloalkyl, C₁₋₁₀-alkoxy, CN, and halo; each Z is an adhesion-promoting moiety; Y is a chemical bond or a divalent linking group chosen from -O-, -S-, -S(=O)-, - S(=O)₂-, -C(=O)-, -(C(R⁵)₂)*_{z}*-, C₅₋₃₀-aryl, and -(C(R⁵)₂)*_{z1}*-(C₅₋₃₀ aryl)-(C(R⁵)₂)*_{z2}*-; each R⁵ is independently chosen from H, hydroxy, halo, C₁₋₁₀-alkyl, C₁₋₁₀-haloalkyl, and C₅₋₃₀-aryl; *a1* = 0 to 3; each *a2* = 0 to 3; *b1* = 1 to 4; each *b2* = 0 to 2; *c1* = 0 to 2; each *c2* = 0 to 2; *a1* + *a2* + *a2* = 1 to 6; *b1* + *b2* + *b2* = 2 to 6; *c1* + *c2* + *c2* = 0 to 6; *d* = 0 to 2; *z* = 1 to 10; *z1* = 0 to 10; *z2* = 0 to 10; and *z1* + *z2* = 1 to 10.

11. The composition of claim 10 wherein each Z has the formula (2)
*-LG(̵APS)*_{w}* (2)
wherein LG is a linking group; each APS is an adhesion-promoting substituent comprising one or more electron-donating atoms chosen from O, N, S, and P; *w* is an integer from 1 to 6; and * is the point of attachment to an aryl moiety; wherein LG is selected such that at least one electron-donating atom of the adhesion-promoting substituent is at least 3 atoms away from the aryl moiety.

12. A method comprising: providing a substrate; coating a layer of the composition of claim 1 on a surface of the substrate; and curing the layer of the composition.

13. The method of claim 12 wherein the layer of the composition is cured by heating.
